(19) Europäisches Patentamt / European Patent Office / Office européen des brevets

(11) **EP 4 018 850 A1**

(12) **EUROPEAN PATENT APPLICATION**
published in accordance with Art. 153(4) EPC

(43) Date of publication:
**29.06.2022 Bulletin 2022/26**

(21) Application number: **20855714.0**

(22) Date of filing: **14.08.2020**

(51) International Patent Classification (IPC):
*A24C 5/34* (2006.01)       *A24D 1/20* (2020.01)
*A24D 3/17* (2020.01)       *A24F 47/00* (2020.01)
*A24F 40/20* (2020.01)

(52) Cooperative Patent Classification (CPC):
**A24C 5/34; A24D 1/20; A24D 3/17; A24F 40/20;
A24F 47/00**

(86) International application number:
**PCT/JP2020/030866**

(87) International publication number:
**WO 2021/033637 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.08.2019 JP 2019150242**

(71) Applicant: **Japan Tobacco Inc.**
**Tokyo 105-6927 (JP)**

(72) Inventor: **ARAE, Kazumasa**
**Tokyo 130-8603 (JP)**

(74) Representative: **Hoffmann Eitle**
**Patent- und Rechtsanwälte PartmbB**
**Arabellastraße 30**
**81925 München (DE)**

(54) **CYLINDRICAL HEATED TOBACCO PRODUCT**

(57)    A smoking article filled with an appropriate amount of reconstituted tobacco is provided. A cylindrical heated tobacco product including a plurality of sections having diameters from 5.4 to 7.8 mm, includes: at least one filter section having a length ranging from 4 to 8 mm, inclusive; and at least one tobacco section having a length ranging from 8 to 18 mm, inclusive, wherein upon irradiation with microwaves having a frequency of 8 GHz, the microwaves having passed through the tobacco section exhibit a phase variation amount ranging from -0.25 to 0.02 (rad).

Fig. 3

$y = -0.0007x + 0.017$

PHASE DIFFERENCE Δφ [rad]

FILLED WEIGHT OF RECONSTITUTED TOBACCO [mg]

**Description**

TECHNICAL FIELD

The present invention relates to a cylindrical heated tobacco product.

BACKGROUND ART

Smoking articles that include an elongated cylindrical container, and (e.g., granulated) reconstituted tobacco filled therein are currently available in the market. Manufacture of such smoking articles requires strict management of the filling volume of reconstituted tobacco, in particular, reconstituted tobacco granules.
Conventionally, as for a cigarette manufacturing process, a device has been known that arranges a pair of electrostatic electrodes to face each other with a tobacco rod intervening therebetween, and measures the filling volume of shredded tobacco from the capacitance between the pair of the electrostatic electrodes (for example, see PTL 1). A device has also been known that irradiates a measurement object with microwaves, and evaluates the property of the measurement object on the basis of the ratio between the amplitude and the phase of microwaves having passed through the measurement object (for example, see PTL 2).

CITATION LIST

PATENT LITERATURE

PTL 1: Japanese Patent Laid-Open No. 11-346747
PTL 2: Japanese Patent Laid-Open No. 2015-161597

SUMMARY OF INVENTION

TECHNICAL PROBLEM

The reconstituted tobacco included in the heated tobacco products is different from the conventional tobacco materials of conventional cigarettes, and contains various additives. The various additives change the amplitude and phase of irradiation microwaves, thus causing disturbance. The conventional method cannot exclude disturbance.
A tobacco section and a tobacco rod of a heated tobacco product including reconstituted tobacco filled therein have a higher density of tobacco material and a higher tobacco material filling density than the tobacco rod of a conventional cigarette. Accordingly, such heated tobacco products cannot be subjected to the method of measuring the density of tobacco material according to a scheme of microwave irradiation, which has been publicly known about conventional cigarettes. In particular, the frequency band of microwaves is different.
In the heated tobacco products including reconstituted tobacco filled therein, the tobacco section that includes reconstituted tobacco as a tobacco material, a section including a material without the tobacco material, and a filter section are consecutive. In the heated tobacco product manufacturing process, the section including the material without the tobacco material, and the filter section change the amplitude and phase of irradiation microwaves to values different from those of the tobacco material, thus causing disturbance. The conventional method cannot exclude disturbance.
As for the heated tobacco product including reconstituted tobacco filled therein, the filling volume of the reconstituted tobacco, reconstituted tobacco granules, or a reconstituted tobacco sheet as the tobacco material is believed highly possibly related to senses obtained by a consumer enjoying one heated tobacco product, the level of smoking experiences, and the number of times of the consumer's enjoying a single heated tobacco product. Accordingly, it is required to manage the amount of tobacco material one by one in a blanket manner, and securely make it conform to the standards. The conventional method has thus been inapplicable, and there is no density measurement method that supports the significantly high speed (1,500/min.) method of manufacturing heated tobacco products. Accordingly, the amount of tobacco material of a heated tobacco product including reconstituted tobacco filled therein cannot be securely made within the appropriate amount.
Consequently, as for the heated tobacco products including reconstituted tobacco filled therein, heated tobacco products subjected to quality control of managing the amount of tobacco material within the appropriate amount have been demanded.
The present invention has been made in view of the above situations, and has an object to provide a smoking article filled with an appropriate amount of reconstituted tobacco, particularly reconstituted tobacco granules.

SOLUTION TO PROBLEM

To solve the problem described above, an aspect of the present invention is a cylindrical heated tobacco product including a plurality of sections having diameters from 5.4 to 7.8 mm, including: at least one filter section having a length ranging from 4 to 8 mm, inclusive; and at least one tobacco section having a length ranging from 8 to 18 mm, inclusive, wherein upon irradiation with microwaves having a frequency of 8 GHz, the microwaves having passed through the tobacco section exhibit a phase variation amount ranging from -0.25 (rad) to 0.02 (rad).

Another aspect of the present invention is a cylindrical heated tobacco product including a plurality of sections having diameters ranging from 5.4 to 7.8 mm, including: at least one filter section having a length ranging from 4 to 8 mm, inclusive; and at least one tobacco section having a length ranging from 8 to 18 mm, inclusive, wherein upon irradiation with microwaves having a frequency of 8 GHz, the tobacco section provides the microwaves with a phase shift ranting from -15.84 (deg) to -5.88 (deg), inclusive.

Another aspect of the present invention is a cylindrical heated tobacco product including a plurality of sections having diameters ranging from 5.4 to 7.8 mm, including: at least one filter section having a length ranging from 4 to 8 mm, inclusive; and at least one tobacco section having a length ranging from 8 to 18 mm, inclusive, wherein upon irradiation with microwaves having a frequency of 8 GHz, the tobacco section provides the microwaves with a phase shift equal to or more than -15.84 (deg) and less than -5.88 (deg).

Another aspect of the present invention is a cylindrical heated tobacco product including a plurality of sections having diameters ranging from 5.4 to 7.8 mm, including: at least one filter section having a length ranging from 4 to 8 mm, inclusive; and at least one tobacco section having a length ranging from 8 to 18 mm, inclusive, wherein upon irradiation with microwaves having a frequency of 8 GHz, the tobacco section provides the microwaves with a phase shift ranting from -15.84 (deg) to -7.32 (deg), inclusive.

Another aspect of the present invention is the aspect described above wherein the filter section and the tobacco section are arranged alternately in a longitudinal direction.

Another aspect of the present invention is the aspect described above wherein the tobacco section includes reconstituted tobacco or reconstituted tobacco granules.

Another aspect of the present invention is the aspect described above wherein the tobacco section includes no shredded tobacco.

Another aspect of the present invention is the aspect described above wherein the tobacco section includes no expanded tobacco.

Another aspect of the present invention is the aspect described above wherein the tobacco section includes no reprocessed tobacco.

ADVANTAGEOUS EFFECTS OF INVENTION

The present invention can provide a smoking article filled with an appropriate amount of reconstituted tobacco.

BRIEF DESCRIPTION OF DRAWINGS

Fig. 1 is a schematic configuration diagram of a cylindrical heated tobacco product according to one embodiment of the present invention.
Fig. 2 is a schematic configuration diagram of a measuring instrument for measuring the weight of reconstituted tobacco with which a tobacco section of a smoking article is filled according to one embodiment of the present invention.
Fig. 3 shows an example of a result of measurement of the smoking article using microwaves.
Fig. 4 shows an example of a result of measurement of the smoking article using microwaves.
Fig. 5 shows an example of a result of measurement of the smoking article using microwaves.
Fig. 6 shows an example of arrangement for measuring the smoking article using microwaves.
Fig. 7 is a graph plotting the correlation between the filling volume of reconstituted tobacco granules and the phase variation amount.
Fig. 8A shows normal probability plots of the phase variation amounts and their expected values about a sample B-1.
Fig. 8B shows normal probability plots of the phase variation amounts and their expected values about a sample B-2.
Fig. 8C shows normal probability plots of the phase variation amounts and their expected values about a sample B-3.
Fig. 8D shows normal probability plots of the phase variation amounts and their expected values about a sample B-4.
Fig. 8E shows normal probability plots of the phase variation amounts and their expected values about a sample B-5.
Fig. 8F shows normal probability plots of the phase variation amounts and their expected values about a sample B-6.

## DESCRIPTION OF EMBODIMENTS

Hereinafter, referring to the drawings, embodiments of the present invention are described in detail.

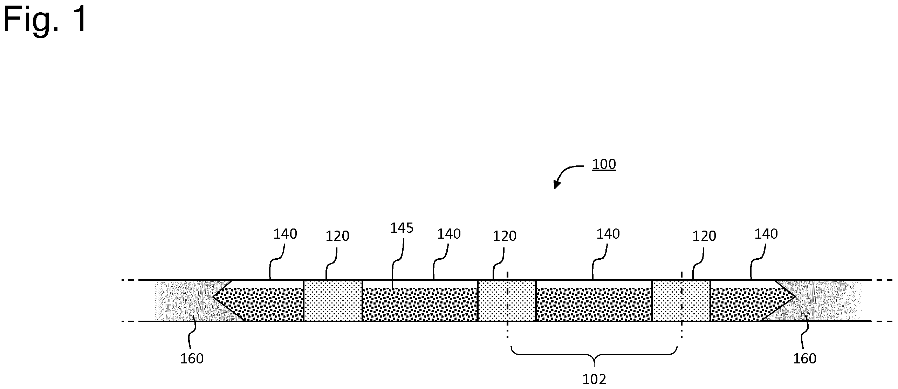

Fig. 1 is a schematic configuration diagram of a cylindrical heated tobacco product according to one embodiment of the present invention, and shows a section along the longitudinal direction. The heated tobacco product 100 has a cylindrical shape with a diameter, for example, from 5.4 to 7.8 mm, and includes a plurality of filter sections 120 and a plurality of tobacco sections 140 arranged alternately in the longitudinal direction. The cylindrical side surfaces of the filter sections 120 and the tobacco sections 140 are integrally covered with wrapping paper 160 so that the filter sections 120 and the tobacco sections 140 would not be unbound.

The filter sections 120 are made of, for example, acetate fibers, and have a function of filtering aerosols caused from the tobacco sections 140. The filter sections 120 may additionally contain activated carbon. The length of the filter section 120 in the longitudinal direction of the heated tobacco product 100 can be configured to range from 4 to 8 mm, inclusive, for example.

The tobacco sections 140 each include a hollow portion provided between two consecutive filter sections 120, and a predetermined amount of reconstituted tobacco 145 with which the hollow portion is filled. The reconstituted tobacco 145 is a tobacco material obtained by first powdering dried leaf tobacco, knead the powder with a binder, such as a polysaccharide or calcium carbonate, and forming it again to have a predetermined form, such as a sheet or granules. For example, the kneaded object containing the powdered leaf tobacco and the binder is extruded, which can obtain the granulated reconstituted tobacco 145. The length of the tobacco section 140 in the longitudinal direction of the heated tobacco product 100 can be configured to range from 8 to 18 mm, inclusive, for example.

Here, a method of manufacturing reconstituted tobacco from leaf tobacco is described in detail.

Leaf tobacco includes leaves, petioles, stalks, and flowers of tobacco plants of cultivated species including *Nicotiana tabacum* and *Nicotiana rustica,* and tobacco plants of wild species including a genus name of *Nicoatiana. Nicotiana tabacum* is roughly classified into known cultivated varieties that include flue-cured, burley, and oriental varieties.

What is obtained by drying leaf tobacco is dried leaf tobacco. The dried leaf tobacco is a tobacco material in the tobacco manufacturing industry. In a tobacco manufacturing process, the dried leaf tobacco is separated into laminas including mesophyll and nervure, and stems including nervures, petioles and stalks.

The mesophyll, parts of stalks, petioles, and nervures are shredded into shredded tobacco. As for the shredded tobacco, the plant tissue or the vascular bundle structure of leaf tobacco is maintained.

What is obtained by expanding the stalks, petioles, nervures, and part of mesophyll through a compression and decompression process is expanded tobacco. The expanded tobacco is similarly shredded, and is mixed into shredded tobacco. As for the expanded tobacco, the plant tissue or the vascular bundle structure of leaf tobacco is expanded and preserved.

Fragments and dust of dried leaf tobacco, shredded tobacco, or expanded tobacco having been broken in the tobacco manufacturing process are dissolved, spread and dried, and thus reprocessed to a reprocessed tobacco or a reprocessed tobacco sheet. The reprocessed tobacco is similarly shredded, and is mixed into shredded tobacco. As for the reprocessed tobacco, the plant tissue or the vascular bundle structure or the cell wall structure of leaf tobacco is preserved.

Leaf tobacco, dried tobacco leaves, shredded tobacco, expanded tobacco, or reprocessed tobacco are crushed and ground, and mixed, thereby obtaining homogenized tobacco.

The homogenized tobacco is kneaded with additives that are any of a binder, gellant, cross-linker, perfume, hydrophilic perfume, lipophilic perfume, viscosity modifier, moisturizer, or reinforcing agent, which are exemplified later, to obtain liquid, gel, sol, or slurry that is a soft solid, and subsequently subjected to a drying process, a dehydrating process, a sheet making process, and extrusion, thereby obtaining reconstituted tobacco.

The binder and gellant may be, for example, natural polymer, gelatin, chondroitin sulfate, polysaccharide, or polysaccharide salts that include alginate, carrageenan, gellan gum, guar gum, agarose, sorbitol, invert sugar, starch, dextrin, starch digest, or oxidized starch. The cross-linker may be, for example, inorganic salt, calcium salt, calcium carbonate, potassium salt, potassium carbonate, magnesium salt, magnesium carbonate, sodium salt, sodium carbonate, or triethyl citrate. The perfume may be, for example, plant essential oil, leaf tobacco extract, ground leaf tobacco liquid, menthol, synthetic perfume, natural perfume, essential oil or the like. Any perfume can be adopted irrespective of hydrophilicity or lipophilicity. The lipophilic perfume may be, for example, vanillin, ethyl vanillin, geranyl-linalool, thymol, methyl salicylate, linalool, eugenol, menthol, clove, anise, cinnamon, bergamot oil, geranium, lemon oil, spearmint oil, or shogaol. The hydrophilic perfume may be, for example, glycerin, propylene glycol, ethyl acetate, or isoamyl alcohol. The viscosity modifier may be, for example, water, fat, fatty acid, hydrophilic solvent, alcohol, ethanol, glycerin, or propylene glycol. The moisturizer may be, for example, water, glycerin, or propylene glycol. The reinforcing agent may be, for example, tobacco fibers, tobacco cellulose fibers, wood pulp, cellulose fibers, non-tobacco cellulose fibers or the like).

Liquid or gel reconstituted tobacco slurry obtained by kneading homogenized tobacco with a binder, gellant, cross-linker, perfume, and viscosity modifier, is formed into a sheet shape, thus obtaining a reconstituted tobacco sheet. The reconstituted tobacco slurry is spread and dried, thus obtaining a reconstituted tobacco paper-made sheet. The reconstituted tobacco slurry is developed on a flat plate, dried and dehydrated, thus obtaining a reconstituted tobacco slurry sheet (reconstituted tobacco cast sheet).

The reconstituted tobacco granules encompass: what is obtained by extruding the reconstituted tobacco slurry that is a gel or soft solid and is obtained by kneading homogenized tobacco with a binder, gellant, cross-linker, perfume, and viscosity modifier; what is obtained by drying the extruded slurry; what is obtained by crushing the dried slurry; or what is obtained by granulating the reconstituted tobacco slurry that is liquid, gel, sol, or soft solid.

Many reconstitution processes for manufacturing homogenized tobacco material sheet have been publicly known in this industry. These processes encompass: types of papermaking processes described in, for example, US-A-3, 860 and 012; types of casting or "cast leaf' processes described in, for example, US-A-5, 724 and 998; types of pulp reconstitution processes described in, for example, US-A-3, 894 and 544; and types of extrusion processes described in, for example, GB-A-983 and 928. However, there is no limitation thereto.

In general, the densities of homogenized tobacco material sheets manufactured by the extrusion processes and the pulp reconstitution processes are higher than the densities of homogenized tobacco material sheets manufactured by the casting processes. As for the reconstituted tobacco sheets and the reconstituted tobacco granules, the plant tissue and the cell wall structure of leaf tobacco are broken in the process of crushing and grinding for homogenization, and the cell wall structures are filled with additives. Accordingly, the weight per unit volume (bulk density), or the weight per unit area (basis weight) is heavy. For example, the reconstituted tobacco slurry sheet can have a basis weight ranging from about 100 g/m$^2$ to about 300 g/m$^2$ under a condition of a room temperature of 26°C and a humidity of 60%. For example, the reconstituted tobacco granules can have a bulk specific gravity ranging from about 40g/100ml to about 60g/100ml under a condition of a room temperature of 26°C and a humidity of 60%.

Since the plant tissue, the vascular bundle structure and the cell wall structure of leaf tobacco are lost by grinding, and the arrangement directions of cellulose fibers are random due to kneading, the reconstituted tobacco is inferior in elasticity to shredded tobacco, expanded tobacco, and reprocessed tobacco. In particular, reconstituted tobacco granules are fragile granules exhibiting little elasticity.

Hereinafter, the structure of a conventional cigarette, and the structure of a heated tobacco product according to an embodiment of the present invention are compared and described.

As for the conventional cigarette, a tobacco rod is configured by wrapping a tobacco material with wrapping paper. The wrapping paper and the tobacco material work together against external forces, and maintain the structure of the tobacco rod. The wrapping paper takes charge of the stresses to a pull force in the longitudinal axis direction, and the tobacco material takes charge of the stresses to the compression force in the longitudinal axis direction and to the shear forces in parallel to a cross-sectional plane with respect to the longitudinal axis, thus maintaining the structure of the tobacco rod. The tobacco material is a mixture of fragments, and the elasticities of the individual fragments take charge of the stresses. Typically, the tobacco rod has a length ranging from 40 to 100 mm, inclusive.

The tobacco material contained in the tobacco rod portion of the cigarette is a mixture of shredded tobacco, expanded tobacco, and a reprocessed tobacco sheet. Typically, the main material is shredded tobacco, and the auxiliary materials are expanded tobacco and a reprocessed tobacco sheet.

In the cigarette, the shredded tobacco, the expanded tobacco and the reprocessed tobacco sheet have secured plant tissue and cell wall structures of leaf tobacco, and include no additives. Accordingly, the tobacco material that is a mixture of them has a low density. The shredded tobacco, the expanded tobacco and the reprocessed tobacco sheet have an excellent elasticity. Accordingly, the amount required to maintain the tobacco rod structure is small. Typically, the filling density of the tobacco material in the tobacco rod of the cigarette is about 0.2 g/cm$^3$.

For example, in the tobacco material of a certain product of a typical cigarette, the main material is shredded tobacco and has 72.5 wt.%, expanded tobacco is an auxiliary material and has 18.1 wt.%, the reprocessed tobacco sheet has 9.2 wt.%, and the tobacco material that is the mixture of the shredded tobacco, the expanded tobacco and the reprocessed tobacco sheet included in the tobacco rod portion has a filling density of 0.216 g/cm$^3$. For example, in the tobacco material of another product of a typical cigarette, the main material is shredded tobacco and has 72.8 wt.%, the expanded tobacco is an auxiliary material and has 22.4 wt.%, the reprocessed tobacco sheet is an auxiliary material and has 4.8 wt.%, and the tobacco material that is the mixture of the shredded tobacco, the expanded tobacco and the reprocessed tobacco sheet included in the tobacco rod portion has a filling density of 0.191 g/cm$^3$.

In the heated tobacco product according to the embodiment of the present invention, the portion including the tobacco material may be formed as a tobacco section, a tobacco rod or a tobacco capsule. The tobacco material may be reconstituted tobacco, a reconstituted tobacco sheet, a reconstituted tobacco slurry sheet, a reconstituted tobacco paper-made sheet, or reconstituted tobacco granules. The tobacco rod may include a reconstituted tobacco sheet, a reconstituted tobacco slurry sheet, or a reconstituted tobacco paper-made sheet as fragments, which are wrapped with wrapping paper.

Unlike the cigarette, because of inferiority in elasticity, the reconstituted tobacco is inferior in capability of cooperate with the wrapping paper to take charge of the stresses to the compression force and the shear force from the outside; the reconstituted tobacco is inferior in capability of taking charge of maintaining the structure of the heated tobacco product. The defect of inferiority of the heated tobacco product in capability of taking charge of maintaining the structure is compensated by the design of the heated tobacco product.

For example, the tobacco section structure is a structure where two acetate fiber sections (filter sections 120) are arranged at appropriate intervals, and are connected with wrapping paper, thus preventing the reconstituted tobacco from taking charge of maintaining the structure. The preferable interval is equal to or less than 18 mm.

For example, the tobacco rod structure is filled with reconstituted tobacco with a higher filling density than that of the conventional cigarette; the filling density is equal to or higher than $0.25$ g/cm$^3$, which exceeds the density ($0.2$ g/cm$^3$) of the tobacco material of the conventional cigarette, and preferably the density is equal to or higher than $0.26$ or $0.27$ g/cm$^3$, and more preferably equal to or higher than $0.3$ g/cm$^3$. For example, with the tobacco capsule structure, the inside of a rigid plastic capsule capable of being unaffected by the external force is filled with reconstituted tobacco granules, and the reconstituted tobacco having no role for the reaction.

In the heated tobacco product according to the embodiment of the present invention, the portion containing the tobacco material may be formed as a tobacco rod or a tobacco section. To maintain the structures of tobacco section and tobacco rod, these are required to be filled with the tobacco material, reconstituted tobacco granules, reconstituted tobacco sheet, reconstituted tobacco slurry sheet, and reconstituted tobacco paper-made sheet, with a higher density than the cigarette. However, if the filling density is too high, the air flow flowing through the heated tobacco product becomes high, that is, the air flow resistance becomes too high, which makes breathing difficult.

In the heated tobacco product according to the embodiment of the present invention, the tobacco sections 140 includes the reconstituted tobacco, reconstituted tobacco sheet, and reconstituted tobacco granules. The heated tobacco product may be a rod-shaped article where one tobacco section 140, and one or two acetate fiber sections (filter sections 120) having air permeability to the tobacco section 140 are consecutive in the longitudinal axis direction. The tobacco section 140 and the acetate fiber sections may be consecutively coupled to each other. The tobacco section 140 and the acetate fiber sections may be consecutively coupled to intermediate sections that do not include tobacco or acetate fibers.

The heated tobacco product is obtained by obtaining a first type consecutive rod-shaped article where tobacco sections 140 and acetate fiber sections (filter sections 120) are adopted as repeating units, and coupled consecutively in the longitudinal axis direction, or by obtaining a second type consecutive rod-shaped article where tobacco sections 140, intermediate sections, and acetate fiber sections (filter sections 120) are adopted as repeating units, and coupled consecutively in the longitudinal axis direction, and subsequently by cutting the first or second type consecutive rod-shaped article at about the midpoints of the acetate fiber sections, or on contact planes between the acetate fiber sections and the tobacco sections 140.

The first type consecutive rod-shaped article is obtained by the following method 1-1 or 1-2. (Method 1-1) On wrapping paper that is formed to have a U-shape and moves in a substantially horizontal direction, acetate fiber sections, in particular, substantially cylindrical acetate fiber section preliminarily wrapped with wrapping paper are mounted at constant intervals, and subsequently the intervals between the acetate fiber sections are filled with reconstituted tobacco granules. After filling with the reconstituted tobacco granules, the opposite ends of the wrapping paper are overlapped, and the edges of the wrapping paper are glued with sealing paste, thus obtaining the first type consecutive rod-shaped article. (Method 1-2) On wrapping paper that is formed to have a U-shape and moves in a substantially horizontal direction, acetate fiber sections, in particular, substantially cylindrical acetate fiber section preliminarily wrapped with wrapping paper are mounted, and reconstituted tobacco sheet sections, in particular, substantially cylindrical reconstituted tobacco sections 140 preliminarily wrapped with wrapping paper are mounted, and subsequently, the opposite ends of the wrapping paper are overlapped, and the edges of the wrapping paper are glued with sealing paste, thus obtaining the first type consecutive rod-shaped article.

The second type consecutive rod-shaped article is obtained by the following method 2. (Method 2) A configuration is achieved by wrapping a tobacco material with wrapping paper. The main material of the tobacco material is reconstituted tobacco. The tobacco rod portion or the tobacco capsule portion of the heated tobacco product is made from a material having a high apparent density. In particular, the amount of reconstituted tobacco sheet included in the tobacco section 140 including the reconstituted tobacco sheet can be a constant amount by cutting the reconstituted tobacco sheet to have a constant length. However, the amount of reconstituted tobacco included in the tobacco section 140 including reconstituted tobacco granules is difficult to be a constant amount.

A conventional density measuring instrument using microwaves publicly known in the cigarette manufacturing industry assumes, as a measurement target, a tobacco material that is a mixture of shredded tobacco, expanded tobacco, and reprocessed tobacco, which have a low density. The instrument cannot be used to measure the densities of the tobacco sections 140 of the heated tobacco product configured to be filled with reconstituted tobacco having a high density than a cigarette. Additives that are not plant tissue that is contained in reprocessed tobacco and is derived from leaf tobacco gives a phase shift to microwaves. Accordingly, the wavelength allowing density measurement is different.

<Example 1> Heated tobacco product manufacturing process, and heated tobacco product prototyping

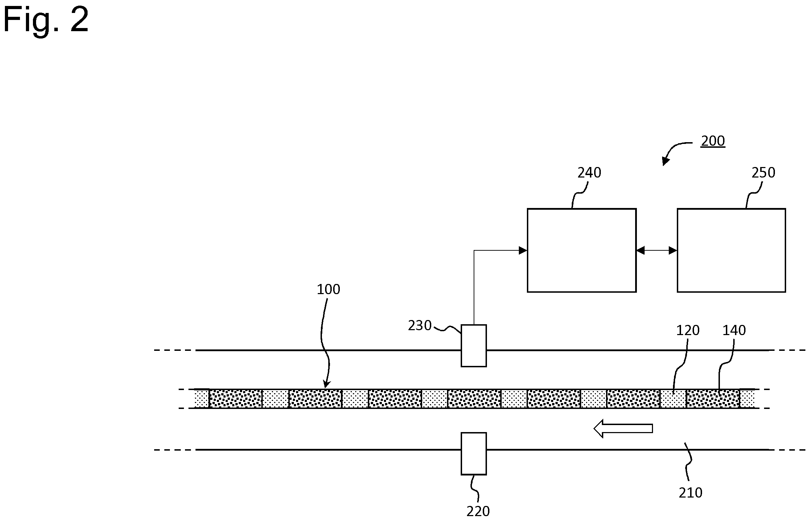

A heated tobacco product 100 shown in Fig. 1 is manufactured as follows. On wrapping paper 160 curved to have U-shape and an opening at the top, a plurality of filter sections 120 is internally arranged at predetermined intervals. Vacant portions intervening between the filter sections 120 are called cavity portions. The wrapping paper 160, and the filter sections 120 arranged therein are conveyed by a conveyance device (e.g., a conveyance unit 210 shown in Fig. 2). A vibration conveyer is installed above the conveyance device. The conveyance device and the vibration conveyer are controlled so that reconstituted tobacco granules can be supplied from a buffer tank to the vibration conveyer, and the reconstituted tobacco granules can fall through a tobacco supply hole provided for the vibration conveyer, at predetermined timing synchronized with the cavity portion moving on the conveyance device, and at a predetermined rate dependent on the filling volume into the cavity portion. The cavity portions between the filter sections 120 are filled with the reconstituted tobacco 145 as described above, thereby forming the tobacco sections 140. Subsequently, the upper opening of the wrapping paper 160 is sealed, thereby completing the heated tobacco product 100 in Fig. 1.

The heated tobacco product 100 where the many filter sections 120 and tobacco sections 140 are consecutive as described above is subjected to a reconstituted tobacco filling volume test described later, and subsequently is cut at the middle of each filter section 120 perpendicularly to the longitudinal direction, thus being separated to individual capsules 102. One capsule 102 is a unit to be used for one time of smoking. During smoking, the tobacco section 140 of the capsule 102 is heated by an electric heater or the like, thereby generating aerosols that contain a tobacco component from the reconstituted tobacco 145.

Fig. 2 is a schematic configuration diagram of a measuring instrument 200 for measuring the weight of reconstituted tobacco 145 with which the tobacco section 140 of the heated tobacco product 100 is filled. The measuring instrument 200 includes a conveyance unit 210, a transmission antenna 220, a reception antenna 230, a computation unit (e.g., a computer including a processor) 240, and a storage unit (e.g., a computer-readable storage device) 250. For example, the measuring instrument 200 can be incorporated as part of a manufacturing apparatus that manufactures the heated tobacco product 100 and the capsules 102 as described above. For example, such a measuring instrument 200 is available as a granule testing instrument (model No. HMW-GM100) from Hakko Automation K.K. (in Fukuoka prefecture).

<Example 2> Measurement of phase variation amount of microwaves at heated tobacco product sample A, and obtainment of calibration curve 1

As shown in Fig. 2, the heated tobacco product 100 where the filter sections 120 and the tobacco sections 140 are consecutive is conveyed by the conveyance unit 210. The heated tobacco product 100 on the conveyance unit 210 is continuously irradiated with microwaves having a frequency ranging from 8 to 24 GHz, inclusive, emitted from the transmission antenna 220, and the microwaves having passed through the heated tobacco product 100 are received by the reception antenna 230. Dependent on the dielectric constant of the material through which the microwaves have passed, the phase of the microwaves changes. The phase of the microwaves received by the reception antenna 230 during absence of the heated tobacco product 100 is assumed as $\phi 1$. The phase of the microwaves having passed through the tobacco section 140 of the heated tobacco product 100 and been received by the reception antenna 230 is assumed as $\phi 2$. The computation unit 240 calculates the weight of the reconstituted tobacco 145 with which each tobacco section 140 of the heated tobacco product 100 is filled, on the basis of the phase difference $\Delta\phi = \phi 2 - \phi 1$ of the received microwaves. Hereinafter, a method of identifying the weight of the reconstituted tobacco from the phase of the microwaves is described.

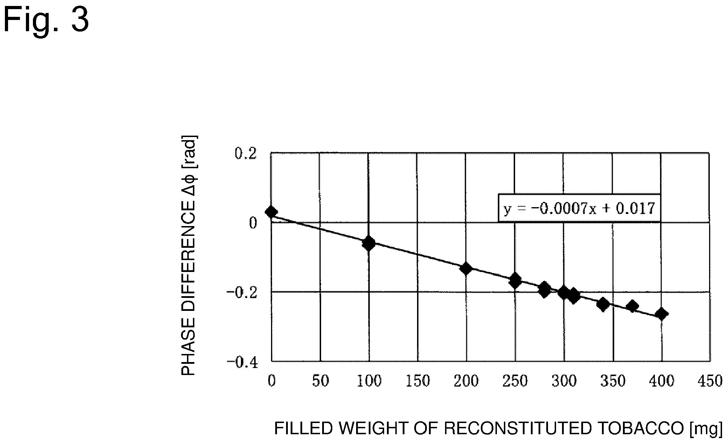

Fig. 3 shows an example of a result of measurement of the phase difference $\Delta\phi = \phi 2 - \phi 1$ about the heated tobacco product 100 whose tobacco sections 140 are filled with the known reconstituted tobacco 145 having various weights (from 100 to 400 mg). The microwaves having a frequency of 8 GHz is used for measurement. The abscissa axis in Fig. 3 indicates the weight of the reconstituted tobacco 145 included in the tobacco sections 140, and the ordinate axis indicates the phase difference $\Delta\phi$. As in this measurement example, the phase difference $\Delta\phi$ and the weight of the reconstituted tobacco 145 have a linear relationship (more specifically, as the weight of the reconstituted tobacco 145 increases from 0 to 400 mg, the phase difference $\Delta\phi$ linearly decreases from 0.02 (rad) to -0.25 (rad). Consequently, if a measurement result as in Fig. 3 is preliminarily obtained, the weight of the reconstituted tobacco 145 included in the tobacco sections 140 can be obtained from the value of the phase difference $\Delta\phi$ measured about the heated tobacco product 100 that is a measurement object.

Specifically, the computation unit 240 identifies the calibration curve (y = -0.0007x+0.017 in the example in Fig. 3) from the preliminarily obtained measurement result as in Fig. 3, and the coefficients of the obtained calibration curve (-0.0007 and 0.017 in the example in Fig. 3) are stored in the storage unit 250. Next, the computation unit 240 reads the coefficients of the calibration curve from the storage unit 250, applies, to the calibration curve, the values of the phase difference $\Delta\phi$ measured about the heated tobacco product 100 that is a measurement object, thereby calculating the weight of the reconstituted tobacco 145 with which each tobacco section 140 is filled.

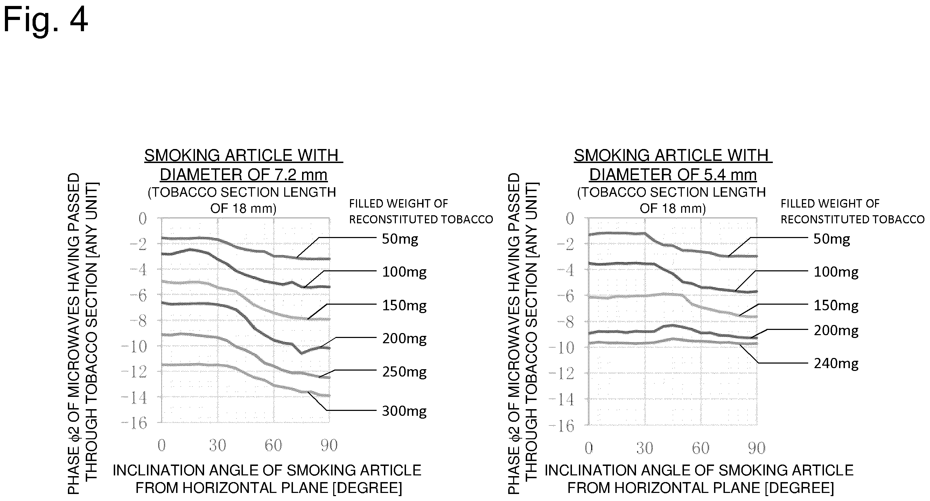

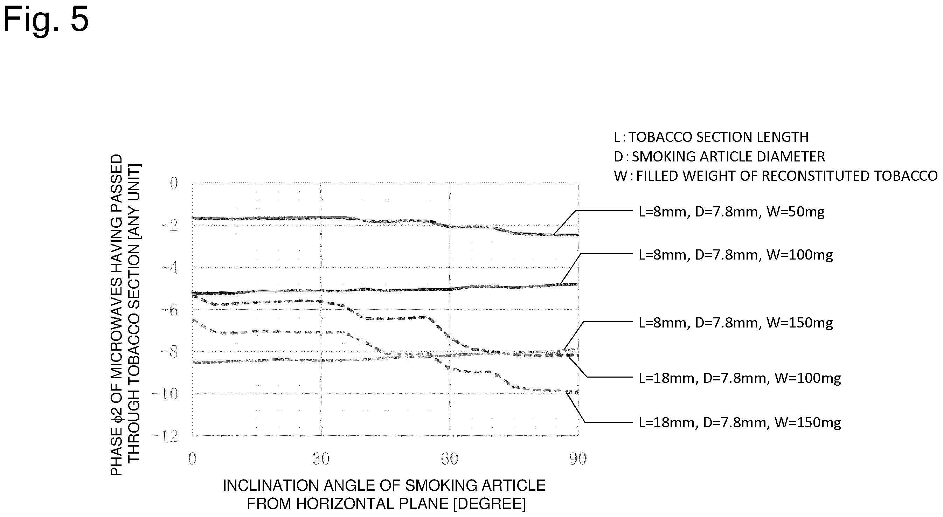

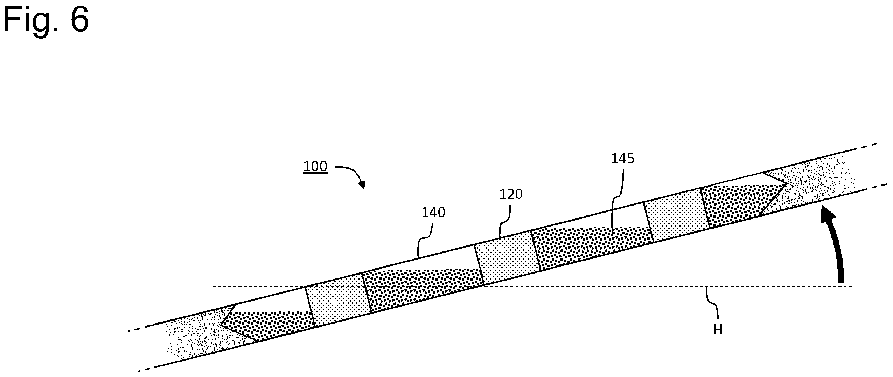

With a certain amount of reconstituted tobacco granules with which the tobacco sections 140 are filled, the reconstituted tobacco granules can possibly move in the tobacco sections 140 to bias the distribution thereof and vary the phase $\phi$2 of microwaves. Figs. 4 and 5 show examples of experiment results exhibiting the effect of the bias of the reconstituted tobacco granules in the tobacco sections 140. In this example, as shown in Fig. 6, in a state where the heated tobacco product 100 is inclined at a predetermined direction from a horizontal plane H, the phase $\phi$2 of the microwaves having passed through the tobacco section 140 is measured. It is believed that with a small filling volume of the reconstituted tobacco 145, the planes formed by the reconstituted tobacco granules in the tobacco sections 140 in the state where the heated tobacco product 100 is inclined from the horizontal plane H is inclined from the longitudinal direction of the heated tobacco product 100 as shown in Fig. 6, and the distribution of the reconstituted tobacco granules in the tobacco sections 140 are biased. In Figs. 4 and 5, the abscissa axis indicates the inclination of the heated tobacco product 100 from the horizontal plane, and the ordinate axis indicates the phase $\phi$2 of measured microwaves.

The experiment result in Fig. 4 shows that for the heated tobacco product 100 having a diameter of 5.4 mm, when the filling volume of the reconstituted tobacco granules is 200 or 240 mg, the phase $\phi$2 of the microwaves having passed through the tobacco section 140 does not so depend on the inclination angle of the heated tobacco product 100. Likewise, the experiment result in Fig. 5 shows that for the heated tobacco product 100 whose tobacco sections 140 have a diameter of 8 mm, the phase $\phi$2 of the microwaves having passed through the tobacco section 140 does not so depend on the inclination angle of the heated tobacco product 100. This is because with the configurations with such dimensions, the filling rate of reconstituted tobacco granules in the tobacco sections 140 is high, and the bias of the reconstituted tobacco granules is resistant to occurring in the tobacco sections 140 accordingly. The experiment result in Fig. 4 also shows that with the inclination angle of the heated tobacco product 100 is about 30° or less, the phase $\phi$2 of the microwaves is substantially constant irrespective of the inclination angle. Consequently, provided that the bias of the reconstituted tobacco granules in the tobacco sections 140 is small, the filled weight of the reconstituted tobacco 145 can be calculated from the value of the phase difference $\Delta\phi$ at a relatively favorable accuracy.

<Example 3> Heated tobacco product sample B prototyping

With a goal of manufacturing seven types of heated tobacco products (samples B1 to B7) where the amounts of reconstituted tobacco granules are 0.0 mg, 50.0 mg, 100.0 mg, 150.0 mg, 200.0 mg, 250.0 mg, and 300.0 mg, samples of heated tobacco products are prototyped according to the following procedures. The filling densities of the reconstituted tobacco granules of the samples B1 to B7 are intended to be 0.0 m g/cm$^3$, 87.3 mg/cm$^3$, 174.6 m g/cm$^3$, 262.0 mg/cm$^3$, 349.3 mg/cm$^3$, 436.6 m g/cm$^3$, and 523.9 mg/cm$^3$.

As materials, the followings were prepared. As wrapping paper, wrapping paper (model number) wound on a bobbin, with a basis weight of 150 g/m$^2$, a thickness of 220 $\mu$m, sandwich lamination S52/#85, a width of 26.5 mm, and a length of 1000 m (made by Nippon Paper Papylia) was prepared. Powder obtained by crushing dried leaf tobacco of burley, flue-cured and oriental varieties was prepared as reconstituted tobacco granules, and kneaded with perfume, and water and calcium carbonate as additives or a moisturizer or viscosity modifier to obtain reconstituted tobacco slurry, which was extruded and subsequently crushed, thus preparing reconstituted tobacco granules having an arranged distribution of particle diameters with a mesh size ranging from 250 to 710. As each filter section, a filter section that includes acetate fibers wrapped with filter forming paper, and has a perimeter of 24.5 mm, a diameter of 7.8 mm, and a length of 4 mm (made by Japan Filter Technology) was prepared. As paste, vinyl acetate paste and hot melt paste were prepared.

The heated tobacco product 100 shown in Fig. 1 was manufactured as follows using the materials described above.

The wrapping paper 160 was installed in a manufacturing machine including a conveyance device, continuously fed from the bobbin. By a paste application device, not shown, vinyl acetate paste and hot melt paste were pasted respectively with a width from 0.8 to 1.0 mm and a width of 0.5 mm on the upper surface of the wrapping paper 160 continuously in a direction substantially parallel to the conveyance direction. The wrapping paper 160 was conveyed by the conveyance device (e.g., the conveyance unit 210 shown in Fig. 2) in the longitudinal direction.

The wrapping paper 160 was curved with a convex oriented downward, and subsequently at about the center thereof in the width direction, filter sections 120 were arranged in the longitudinal direction of the wrapping paper 160 at predetermined intervals (12 mm in this case).

The wrapping paper 160 and the filter sections 120 were continuously conveyed in the longitudinal direction by the conveyance unit 210, while the wrapping paper 160 was bent so that the edges could be oriented upward. The wrapping paper 160 and the arranged filter sections 120 had forms where the groove of U-shaped wrapping paper 160 open upward was segmented by the filter sections 120 (the segments were to be cavity portions after completion of the process, and are called cavity portions for the convenience sake).

A conveyer belt was installed above the conveyance unit 210. The conveyance device and the conveyer belt were controlled so that reconstituted tobacco granules could be supplied from a buffer tank to the conveyer belt, and the reconstituted tobacco granules could fall through a tobacco supply hole provided for the vibration conveyer, at predetermined timing synchronized with the cavity portion moving on the conveyance device, and at a predetermined rate dependent on the filling volume into the cavity portion. Accordingly, the cavity portions on the conveyance unit 210 were filled with reconstituted tobacco granules from above through the tobacco supply hole, thus forming the tobacco sections 140.

By a paste application device, nor shown, vinyl acetate paste and hot melt paste were pasted respectively with a width from 0.8 to 1.0 mm and a width of 0.5 mm on a vicinity of an edge on one side of the wrapping paper 160 bent to be oriented upward, continuously in a direction substantially parallel to the conveyance direction. The edge on the one side of the wrapping paper 160 applied with the paste was overlapped with the vicinity of the edge of the other side of the wrapping paper 160, the wrapping paper 160 was pasted with a width of about 2.0 mm at about the two edges.

After the processes described above, an intermediate body of the heated tobacco product cylindrically formed to have a continuous rod shape was obtained. The continuous rod-shaped intermediate body of the heated tobacco product was cut to have a constant length and include six segments of tobacco sections 140, thus obtaining the heated tobacco products 100 each having a length of 120 mm, a diameter of 7.8 mm, and a perimeter of 24.5 mm.

For the intermediate body of the heated tobacco product on the conveyance unit 210, the phase variation amount of microwaves were measured by the measuring instrument 200. Between the microwaves emitted to the measurement target, and the received microwaves, a change occurred in the phases of microwaves dependent on the dielectric constant of each tobacco section 140 of the heated tobacco product 100 through which the microwaves had passed. The phase variation amount was measured. The temporally obtained measurement result was stored as phase variation amount data in the storage unit 250 through the computation unit 240. The heated tobacco product 100 passed between two antennas, which were transmission antenna 220 and the reception antenna 230 provided to face the measuring instrument 200, while being irradiated with microwaves having a frequency of 8 GHz from the transmission antenna 220. Microwaves having passed through the tobacco section 140 of the heated tobacco product 100 was received by the reception antenna 230. When the heated tobacco product 100 was irradiated with the microwaves having a phase $\phi0$, the phase of microwaves having passed through the filter section 120 was changed to $\phi1$, and the phase of microwaves having passed through the tobacco section 140 was changed to $\phi2$. The change from $\phi1$ to $\phi2$ was a periodic change because the heated tobacco product 100 had the structure where the tobacco sections 140 and the filter sections 120 were alternately arranged.

The path lengths from the reception and transmission antennas of the measuring instrument 200 to the cutting site was preliminarily registered in the storage unit 250. The path length was an integral multiple of the total length of the tobacco section 140; three fold in this case. The total length of the heated tobacco product 100, the length of the tobacco section 140, the length of the filter section 120, and the ratio of each section to the total length of the heated tobacco product 100 were preliminarily registered in the storage unit 250.

Periodical and continuous raw data obtained by the measuring instrument 200 was processed by the computation unit 240. The peak of the phase variation amount was detected in an interval of $\pm5\%$ of 12 mm, which was the length of the tobacco section 140, with reference to the center position of each tobacco section 140 of the heated tobacco product 100, that is, in an interval 6.0 mm$\pm$0.6 mm before and after a position at which the filter sections 120 and the tobacco section 140 were contact with each other, and the phase variation amount of the peak was extracted, and was adopted as the phase variation amount of the tobacco section. Furthermore, the number of peaks of the phase variation amount was captured and counted. These processing results by the computation unit 240 were stored in the storage unit 250. This allowed each tobacco section 140 and its phase variation amount to be matched.

In the following Example 4, every time a sufficient number (at least 100) of samples of the heated tobacco products 100 were manufactured, the supply amount (supply speed) of reconstituted tobacco granules falling from the vibration conveyer per minute was adjusted by adjusting the vibration rate of the vibration conveyer to achieve a supply speed predicted to satisfy the intended granule filling volume on the basis of the recorded phase variation amount data and the calibration curve described above. As described above, samples B-1, B-2, B-3, B-4, B-5, B-6 and B-7 of heated tobacco products 100 having intended granule filling volumes were sequentially manufactured. The other process conditions were not changed. The sample B-7 with an intended reconstituted tobacco granules of 300.0 mg was not appropriately filled because the cavity portion passed the position immediately below the tobacco supply hole before the cavity portion was entirely filled with the reconstituted tobacco granules. Accordingly, the sample B-7 was excluded from the following Example 4. Table 1 shows the intended granule weights of the samples B-1 to B-6, and the mean values of phase variation amounts for consecutively manufactured 100 heated tobacco products 100 in the respective samples.

[Table 1]

| Sample | Intended granule weight | Intended granule density | Phase variation amount | |
|---|---|---|---|---|
| | [mg/cavity] | [mg/cm3] | Δ[deg] | Δ[rad] |
| B-1 | 0.0 | 0.0 | -5.88 | -0.10 |
| B-2 | 50.0 | 87.3 | -7.32 | -0.13 |
| B-3 | 100.0 | 174.6 | -9.73 | -0.17 |
| B-4 | 150.0 | 262.0 | -12.03 | -0.21 |
| B-5 | 200.0 | 349.3 | -13.97 | -0.24 |
| B-6 | 250.0 | 436.6 | -15.84 | -0.28 |
| B-7 | 300.0 | 523.9 | No Data | No Data |
| (Blank) | - | - | 0.00 | 0.00 |

<Example 4> Measurement of weights of reconstituted tobacco granules of heated tobacco product samples B1 to B-6 Ten samples were randomly selected from at least 100 each from samples B-1 to B-6 obtained in the Example 3 described above, and the weight was measured one by one by an even balance (ME4001T/00 made by Mettler Toledo). The weights of the wrapping paper, the filter section and the paste, which were the materials other than the reconstituted tobacco granules, were subtracted from the weight of the sample, and the actually measured weight of the reconstituted tobacco granules, with which the single sample was filled, was calculated. The calculated weight of the reconstituted tobacco granules was divided by six, which was the number of cavity portions, and the weight of the reconstituted tobacco granules included in a single cavity portion was calculated. Table 2 shows the intended granule weights of the samples B-1 to B-6, and mean weight of the reconstituted tobacco granules included in one cavity portion, and the granule density.

[Table 2]

| Sample | Intended granule weight | Intended granule density | Granule weight | | Granule density |
|---|---|---|---|---|---|
| | [mg/cavity] | [mg/cm3] | [mg/stick] | [mg/cavity] | [mg/cm3] |
| B-1 | 0.0 | 0.0 | 0.0 | 0.0 | 0.0 |
| B-2 | 50.0 | 87.3 | 315.0 | 52.5 | 91.6 |
| B-3 | 100.0 | 174.6 | 605.0 | 100.8 | 175.9 |
| B-4 | 150.0 | 262.0 | 920.0 | 153.3 | 267.4 |
| B-5 | 200.0 | 349.3 | 1260.0 | 210.0 | 366.4 |
| B-6 | 250.0 | 436.6 | 1565.0 | 260.8 | 455.0 |

As evidenced by Table 2, the phase variation amount of the tobacco sections 140 obtained by irradiation with the microwaves with 8 GHz was adopted as an indicator, and the heated tobacco product 100 manufactured to have the intended granule weight achieved 5% of the difference between the intended value granule weight and the actually measured granule weight. The filling with the tobacco material was successfully achieved at the granule density, i.e., a higher density than that of the conventional cigarette.

<Example 5> Data analysis

To verify the linearity between the phase variation amounts of the samples B-1 to B-6 and the weights of the reconstituted tobacco granules obtained in Examples 3 and 4 described above, the reconstituted tobacco weight and the phase variation amount (Δ[rad]) were linearly approximated, and the correlation coefficient was calculated.

$$y = -0.0007x + 0.0033, R^2 = 0.9954$$

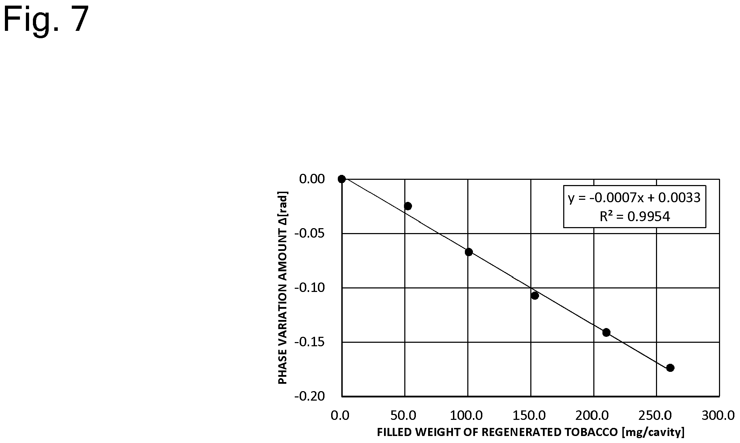

Fig. 7 shows a graph of plotting the filling volume of the reconstituted tobacco granules of the samples B-1 to B-6 obtained in Example 4 on the X axis, and the phase variation amounts of the samples B-1 to B-6 obtained in Example 3 on the Y axis. As evidenced by the linear approximation equation, the correlation coefficient and Fig. 7, it is shown that the samples of the heated tobacco products 100 manufactured, with the respective intended granule weights, using, as the indicators, the phase variation amounts obtained by irradiation with microwaves with 8 GHz have the linear relationship between the phase variation amount and the granule weight in the range of the phase variation amount of the tobacco section 140 from 0.00 to -10.00 (deg). Consequently, it is confirmed that if a measurement result as in Fig. 3 is preliminarily obtained, the weight of the reconstituted tobacco 145 included in the tobacco sections 140 can be obtained from the value of the phase difference $\Delta\phi$ measured about the heated tobacco product 100 that is a measurement object.

The inventors sufficiently familiar with the cigarette manufacturing process have known that in a manufacturing lot of, for example, units of 1000 to 10000 of mass produced cigarettes, the filling volumes of the tobacco material are accommodated in the standard, as the entire lot, but the volumes of some individual cigarette products deviate from the standard on rare occasions, and products in the lot out of the standard are excluded by a sampling test in a quality management process after the manufacturing process, thus managing the quality.

As for the heated tobacco product including reconstituted tobacco filled therein, the inventors have recognized the object where the filling volume of the tobacco material (reconstituted tobacco, reconstituted tobacco granules, and a reconstituted tobacco sheet) is highly possibly related to senses obtained by a consumer enjoying one heated tobacco product, the level of smoking experiences, and the number of times of the consumer's enjoying a single heated tobacco product, and it is thus required to manage the amount of tobacco material one by one in a blanket manner, and securely make it conform to the standards. However, the tobacco material measurement method well known in the cigarette manufacturing process is inapplicable to the heated tobacco manufacturing process, and there is no density measurement method that can support the significantly high speed (equal to or higher than 1,500/min.) of the method of manufacturing heated tobacco products. Consequently, the amount of tobacco material of a heated tobacco product cannot be securely made within the standard.

Accordingly, the inventors have made a hypothesis that the distribution of the piece-by-piece filling volume of the tobacco material (the reconstituted tobacco, reconstituted tobacco granules, and reconstituted tobacco sheet) with which the heated tobacco product is filled possibly may conform to a normal distribution, and conceived that if it is confirmed that the piece-by-piece phase variation amount obtained by irradiation with microwaves with 8 GHz in the samples B-1 to B-6 obtained in Example 3 conforms to the normal distribution, the phase variation amount simultaneously obtained on a piece-by-piece basis during the heated tobacco product manufacturing is checked against the mean value and standard deviation of finite number of items to achieve quality control that secures the entire filling volumes of the manufactured reconstituted tobacco granules of the heated tobacco within the standard.

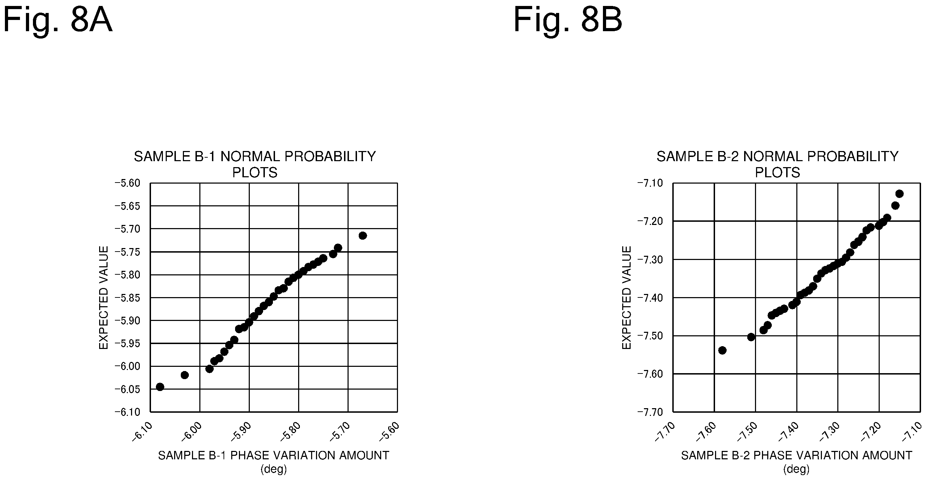

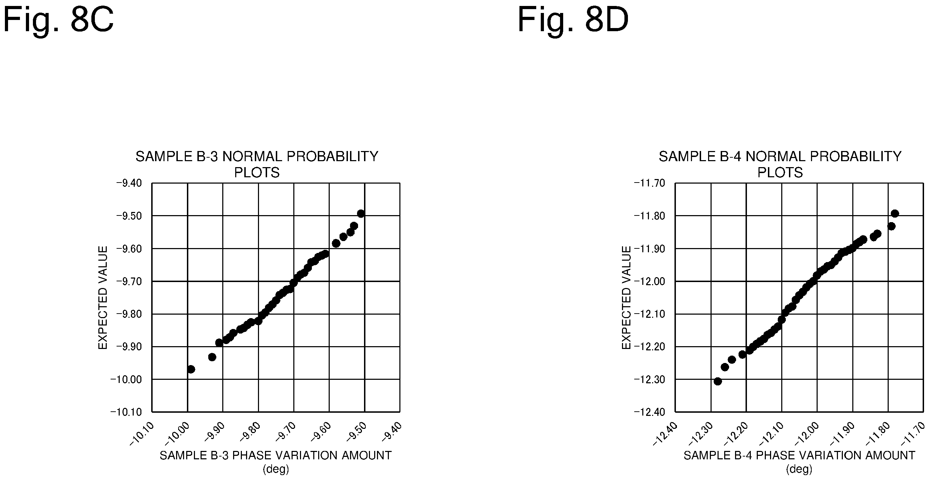

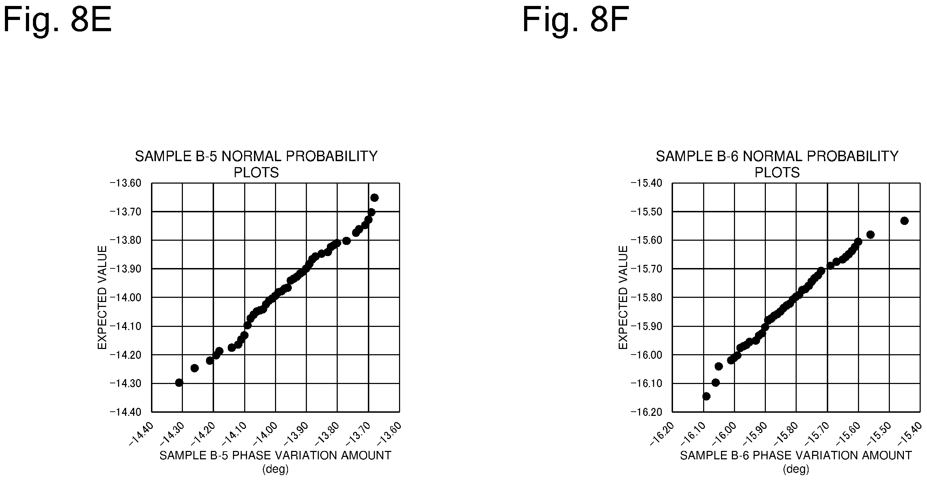

Accordingly, for the samples B-1 to B-6, the phase variation amount is indicated on the abscissa axis, and the expected value is indicated on the ordinate axis, and normal probability plots are drawn. It was verified that the phase variation amount of 100 heated tobacco products consecutively manufactured in each sample conformed to the normal distribution. The results are shown in Figs. 8A to 8F. As for the drawn normal probability plots, the measured values of the phase variation amounts and the expected values of the samples B-1 to B-6 are linearly arranged. The basic statistics of the samples B-1 to B-6 were calculated, thus obtaining the following Table 3. The mean values, medians, and modes were found to be substantially identical. It was confirmed that the phase variation amount per piece of the heated tobacco product obtained by irradiation with microwaves with 8 GHz conformed to the normal distribution.

[Table 3]

|  | B-1 | B-2 | B-3 | B-4 | B-5 | B-6 |
|---|---|---|---|---|---|---|
| Mean ($\mu$) | -5.88 | -7.32 | -9.73 | -12.03 | -13.97 | -15.84 |
| Standard error | 0.01 | 0.01 | 0.01 | 0.01 | 0.01 | 0.01 |
| Median | -5.89 | -7.31 | -9.73 | -12.04 | -13.98 | -15.85 |
| Mode | -5.93 | -7.36 | -9.71 | -12.07 | -13.96 | -15.90 |
| Standard deviation ($\sigma$) | 0.06 | 0.09 | 0.09 | 0.11 | 0.13 | 0.12 |
| Variance ($\sigma^2$) | 0.00 | 0.01 | 0.01 | 0.01 | 0.02 | 0.01 |
| Kurtosis | 1.31 | 0.00 | 0.24 | 2.23 | 0.07 | 0.44 |
| Skewness | 0.34 | -0.29 | -0.20 | 0.81 | 0.20 | 0.37 |
| Minimum | -6.08 | -7.58 | -9.99 | -12.28 | -14.31 | -16.09 |
| Maximum | -5.67 | -7.15 | -9.51 | -11.59 | -13.68 | -15.45 |

(continued)

|  | B-1 | B-2 | B-3 | B-4 | B-5 | B-6 |
|---|---|---|---|---|---|---|
| The number of data items | 100 | 100 | 100 | 100 | 100 | 100 |

Consequently, the heated tobacco products can be subjected to quality control by measuring the phase variation amount of microwaves with a frequency of 8 GHz having passed through the tobacco section, and by adopting the mean value $\mu$ and standard deviation $\sigma$ of temporally obtained actually measured data. As for the heated tobacco product, based on actually measured data on the phase variation amounts with microwaves with a frequency of 8 GHz having passed through the tobacco section, with the phase variation amounts of $\mu\pm3\sigma$, $\mu\pm2\sigma$, and $\mu\pm\sigma$ being adopted as management standards, the filling volume of the reconstituted tobacco granules can be managed.

For example, provided that $\mu\pm3\sigma$, $\mu\pm2\sigma$ and $\mu\pm\sigma$ are adopted as the management standard, one B-1 sample indicating the minimum value of -6.08 and one B-1 sample indicating the maximum value of -5.67 on the basic statistics table (Table 3) deviate from the management standard and are excluded from the manufacturing process accordingly, one B-2 sample indicating the minimum value of -7.15 and one B-2 sample indicating the maximum value of -7.58 on the basic statistics table deviate from the management standard and are excluded from the manufacturing process accordingly, one B-3 sample indicating the minimum value of -9.51 and one B-3 sample indicating the maximum value of -9.99 on the basic statistics table deviate from the management standard and are excluded from the manufacturing process accordingly, one B-4 sample indicating the minimum value of -11.59 and one B-4 sample indicating the maximum value of -12.28 on the basic statistics table deviate from the management standard and are excluded from the manufacturing process accordingly, one B-5 sample indicating the minimum value of -13.68 and one B-5 sample indicating the maximum value of -14.31 on the basic statistics table deviate from the management standard and are excluded from the manufacturing process accordingly, and one B-6 sample indicating the minimum value of -15.45 and one B-6 sample indicating the maximum value of -16.09 on the basic statistics table deviate from the management standard and are excluded from the manufacturing process accordingly.

Consequently, based on the data actually measured for the samples B-1 to B-6, in detail, heated tobacco products that are not excluded by the quality control are heated tobacco products with the phase variation amount ranging in -5.88±0.18 [deg], heated tobacco products that are not excluded by the quality control are heated tobacco products with the phase variation amount ranging in -7.32±0.27 [deg], heated tobacco products that are not excluded by the quality control are heated tobacco products with the phase variation amount ranging in -9.73±0.27 [deg], heated tobacco products that are not excluded by the quality control are heated tobacco products with the phase variation amount ranging in -12.03±0.33 [deg], heated tobacco products that are not excluded by the quality control are heated tobacco products with the phase variation amount ranging in -13.97±0.39 [deg], and heated tobacco products that are not excluded by the quality control are heated tobacco products with the phase variation amount ranging in -15.84±0.36 [deg]. Such heated tobacco products are subjected to quality control with the filling volume of the reconstituted tobacco granules being $\mu\pm3\sigma$.

Consequently, based on the data actually measured for the samples B-1 to B-6, in detail, heated tobacco products that are not excluded by the quality control are heated tobacco products with the phase variation amount ranging in -5.88±0.12 [deg], heated tobacco products that are not excluded by the quality control are heated tobacco products with the phase variation amount ranging in -7.32±0.18 [deg], heated tobacco products that are not excluded by the quality control are heated tobacco products with the phase variation amount ranging in -9.73±0.18 [deg], heated tobacco products that are not excluded by the quality control are heated tobacco products with the phase variation amount ranging in -12.03±0.22 [deg], heated tobacco products that are not excluded by the quality control are heated tobacco products with the phase variation amount ranging in -13.97±0.26 [deg], and heated tobacco products that are not excluded by the quality control are heated tobacco products with the phase variation amount ranging in -15.84±0.24 [deg]. Such heated tobacco products are subjected to quality control with the filling volume of the reconstituted tobacco granules being $\mu\pm2\sigma$.

Consequently, based on the data actually measured for the samples B-1 to B-6, in detail, heated tobacco products that are not excluded by the quality control are heated tobacco products with the phase variation amount ranging in -5.88±0.06 [deg], heated tobacco products that are not excluded by the quality control are heated tobacco products with the phase variation amount ranging in -7.32±0.09 [deg], heated tobacco products that are not excluded by the quality control are heated tobacco products with the phase variation amount ranging in -9.73±0.09 [deg], heated tobacco products that are not excluded by the quality control are heated tobacco products with the phase variation amount ranging in -12.03±0.11 [deg], heated tobacco products that are not excluded by the quality control are heated tobacco products with the phase variation amount ranging in -13.97±0.13 [deg], and heated tobacco products that are not excluded by the quality control are heated tobacco products with the phase variation amount ranging in -15.84±0.12 [deg]. Such heated tobacco products are subjected to quality control with the filling volume of the reconstituted tobacco

granules being $\mu \pm \sigma$.

With respect to the phase variation amounts obtained by irradiation with microwaves with 8GHz, the heated tobacco products having the phase variation amounts in the range described above are excellent heated tobacco products having subjected to quality control on the granule filling volume. Only the heated tobacco products having been subjected to such quality control can be delivered to the following wrapping procedure. Likewise, only these products can be stored in a warehouse. Likewise, only these products can be shipped. Likewise, only these products can be distributed. Likewise, only these products can be used by consumers.

Heated tobacco products exhibiting the phase variation amount ranging from -0.25 (rad) to 0.02 (rad) with irradiation with microwaves with 8GHz are heated tobacco products having an excellent quality with senses expected by consumers being secured by quality control.

Based on Examples 3 and 4, heated tobacco products including tobacco sections exhibiting the phase variation amount equal to or higher than -15.84 (deg) and equal to or lower than -5.88 (deg) with irradiation with microwaves with 8GHz, are heated tobacco products having an excellent quality with senses expected by the consumers being secured.

Based on Examples 3 and 4, heated tobacco products including tobacco sections exhibiting the phase variation amount equal to or higher than -15.84 (deg) and lower than -5.88 (deg) with irradiation with microwaves with 8GHz, are heated tobacco products having an excellent quality with senses expected by the consumers being secured.

Based on Example 5, heated tobacco products including tobacco sections exhibiting the phase variation amount ranging in -15.84 $\pm$ 0.36 (deg) or in -15.84 $\pm$ 0.24 (deg) or in -15.84 $\pm$ 0.12 (deg) with irradiation with microwaves with 8GHz, are heated tobacco products having an excellent quality with senses expected by the consumers being secured.

The embodiments of the present invention have been described above. However, the present invention is not limited thereto, and can be variously modified in a range without departing from the gist.

REFERENCE SIGNS LIST

| | |
|---|---|
| 100 | Heated tobacco product |
| 102 | Capsule |
| 120 | Filter section |
| 140 | Tobacco section |
| 145 | Reconstituted tobacco |
| 160 | Wrapping paper |
| 200 | Measuring instrument |
| 210 | Conveyance unit |
| 220 | Transmission antenna |
| 230 | Reception antenna |
| 240 | Computation unit |
| 250 | Storage unit |

**Claims**

1. A cylindrical heated tobacco product including a plurality of sections having diameters ranging from 5.4 to 7.8 mm, comprising:

   at least one filter section having a length ranging from 4 to 8 mm, inclusive; and
   at least one tobacco section having a length ranging from 8 to 18 mm, inclusive,
   wherein upon irradiation with microwaves having a frequency of 8 GHz, the microwaves having passed through the tobacco section exhibit a phase variation amount ranging from -0.25 (rad) to 0.02 (rad).

2. A cylindrical heated tobacco product including a plurality of sections having diameters ranging from 5.4 to 7.8 mm, comprising:

   at least one filter section having a length ranging from 4 to 8 mm, inclusive; and
   at least one tobacco section having a length ranging from 8 to 18 mm, inclusive,
   wherein upon irradiation with microwaves having a frequency of 8 GHz, the tobacco section provides the microwaves with a phase shift ranging from -15.84 (deg) to -5.88 (deg), inclusive.

3. A cylindrical heated tobacco product including a plurality of sections having diameters ranging from 5.4 to 7.8 mm, comprising:

   at least one filter section having a length ranging from 4 to 8 mm, inclusive; and
   at least one tobacco section having a length ranging from 8 to 18 mm, inclusive,
   wherein upon irradiation with microwaves having a frequency of 8 GHz, the tobacco section provides the microwaves with a phase shift equal to or more than -15.84 (deg) and less than -5.88 (deg).

4. A cylindrical heated tobacco product including a plurality of sections having diameters ranging from 5.4 to 7.8 mm, comprising:

   at least one filter section having a length ranging from 4 to 8 mm, inclusive; and
   at least one tobacco section having a length ranging from 8 to 18 mm, inclusive,
   wherein upon irradiation with microwaves having a frequency of 8 GHz, the tobacco section provides the microwaves with a phase shift ranging from -15.84 to -7.32 (deg), inclusive.

5. The cylindrical heated tobacco product according to any one of claims 1 to 4, wherein the filter section and the tobacco section are arranged alternately in a longitudinal direction.

6. The cylindrical heated tobacco product according to any one of claims 1 to 5, wherein the tobacco section includes reconstituted tobacco.

7. The cylindrical heated tobacco product according to any one of claims 1 to 6, wherein the tobacco section includes reconstituted tobacco granules.

8. The cylindrical heated tobacco product according to any one of claims 1 to 7, wherein the tobacco section includes no shredded tobacco.

9. The cylindrical heated tobacco product according to any one of claims 1 to 8, wherein the tobacco section includes no expanded tobacco.

10. The cylindrical heated tobacco product according to any one of claims 1 to 9, wherein the tobacco section includes no reprocessed tobacco.

# Fig. 1

# Fig. 2

Fig. 3

Fig. 4

SMOKING ARTICLE WITH
DIAMETER OF 7.2 mm
(TOBACCO SECTION LENGTH
OF 18 mm)

PHASE φ2 OF MICROWAVES HAVING PASSED
THROUGH TOBACCO SECTION [ANY UNIT]

INCLINATION ANGLE OF SMOKING ARTICLE
FROM HORIZONTAL PLANE [DEGREE]

FILLED WEIGHT OF
RECONSTITUTED TOBACCO

50mg
100mg
150mg
200mg
250mg
300mg

SMOKING ARTICLE WITH
DIAMETER OF 5.4 mm
(TOBACCO SECTION LENGTH
OF 18 mm)

PHASE φ2 OF MICROWAVES HAVING PASSED
THROUGH TOBACCO SECTION [ANY UNIT]

INCLINATION ANGLE OF SMOKING ARTICLE
FROM HORIZONTAL PLANE [DEGREE]

FILLED WEIGHT OF
RECONSTITUTED TOBACCO

50mg
100mg
150mg
200mg
240mg

Fig. 5

L : TOBACCO SECTION LENGTH
D : SMOKING ARTICLE DIAMETER
W : FILLED WEIGHT OF RECONSTITUTED TOBACCO

L=8mm, D=7.8mm, W=50mg

L=8mm, D=7.8mm, W=100mg

L=8mm, D=7.8mm, W=150mg

L=18mm, D=7.8mm, W=100mg

L=18mm, D=7.8mm, W=150mg

PHASE φ2 OF MICROWAVES HAVING PASSED
THROUGH TOBACCO SECTION [ANY UNIT]

INCLINATION ANGLE OF SMOKING ARTICLE
FROM HORIZONTAL PLANE [DEGREE]

EP 4 018 850 A1

Fig. 6

EP 4 018 850 A1

# Fig. 7

Graph:
- Y-axis: PHASE VARIATION AMOUNT Δ[rad], from 0.00 to -0.20
- X-axis: FILLED WEIGHT OF REGENERATED TOBACCO [mg/cavity], from 0.0 to 300.0

$y = -0.0007x + 0.0033$

$R^2 = 0.9954$

# Fig. 8A

**SAMPLE B-1 NORMAL PROBABILITY PLOTS**

EXPECTED VALUE vs SAMPLE B-1 PHASE VARIATION AMOUNT (deg)

# Fig. 8B

**SAMPLE B-2 NORMAL PROBABILITY PLOTS**

EXPECTED VALUE vs SAMPLE B-2 PHASE VARIATION AMOUNT (deg)

# Fig. 8C

**SAMPLE B-3 NORMAL PROBABILITY PLOTS**

# Fig. 8D

**SAMPLE B-4 NORMAL PROBABILITY PLOTS**

EP 4 018 850 A1

Fig. 8F

SAMPLE B-6 NORMAL PROBABILITY PLOTS

Fig. 8E

SAMPLE B-5 NORMAL PROBABILITY PLOTS

| **INTERNATIONAL SEARCH REPORT** | International application No. |
|---|---|
| | PCT/JP2020/030866 |

**A. CLASSIFICATION OF SUBJECT MATTER**
A24C 5/34(2006.01)i; A24D 1/20(2020.01)i; A24D 3/17(2020.01)i; A24F 47/00(2020.01)i; A24F 40/20(2020.01)i
FI: A24C5/34 A; A24D1/20; A24D3/17; A24F40/20; A24F47/00
According to International Patent Classification (IPC) or to both national classification and IPC

**B. FIELDS SEARCHED**

Minimum documentation searched (classification system followed by classification symbols)
A24C5/34; A24D1/20; A24D3/17; A24F40/00-47/00; G01N22/00-22/04

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/215781 A1 (ELUCID8 HOLDINGS LTD.) 29.11.2018 (2018-11-29) page 4, line 20 to page 6, line 2, fig. 1 | 1-10 |
| A | WO 2018/050717 A1 (BRITISH AMERICAN TOBACCO (INVESTMENTS) LIMITED) 22.03.2018 (2018-03-22) page 6, line 25 to page 7, line 2, page 7, line 24 to page 8, line 4, page 10, lines 6-15, fig. 2 | 1-10 |
| A | JP 2002-522786 A (MALCAM LTD.) 23.07.2002 (2002-07-23) paragraphs [0010]-[0013] | 1-10 |
| A | JP 09-325123 A (HAUNI MASCHINENBAU AG) 16.12.1997 (1997-12-16) claims 1, 16 | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 October 2020 (02.10.2020) | 20 October 2020 (20.10.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/030866

| Patent Documents referred in the Report | Publication Date | Patent Family | Publication Date |
|---|---|---|---|
| WO 2018/215781 A | 29 Nov. 2018 | JP 2020-520678 A<br>US 2020/0113227 A1<br>EP 3629779 A1<br>GB 2562764 A<br>CA 3064084 A1<br>CN 110891434 A<br>KR 10-2020-0031079 A | |
| WO 2018/050717 A1 | 22 Mar. 2018 | JP 2019-528716 A<br>US 2019/0254343 A1<br>EP 3512368 A1<br>CA 3035292 A1<br>KR 10-2019-0039429 A<br>CN 109688855 A<br>RU 2020103229 A<br>RU 2020103218 A<br>RU 2713322 C1 | |
| JP 2002-522786 A | 23 Jul. 2002 | WO 2000/009983 A2<br>page 3, line 30 to<br>page 4, line 22<br>US 6107809 A<br>EP 1116041 A2<br>CA 2339922 A1<br>AU 5063299 A<br>BR 9912701 A<br>IL 141180 A | |
| JP 09-325123 A | 16 Dec. 1997 | EP 791823 A2<br>CN 1186953 A<br>CN 1670515 A<br>DE 19705260 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11346747 A

- JP 2015161597 A